# EUROPEAN PATENT APPLICATION

(11) **EP 2 611 082 A1**
(43) Date of publication of application: **03.07.2013**
(21) Application number: 12305001.5
(22) Date of filing: 02.01.2012
(51) Int. Cl.: H04L 12/58

(54) **Method for instant communicating between instant messaging clients**

(71) Applicant: Alcatel Lucent, 75007 Paris (FR)
(72) Inventor: Lou, Zhe, 2640 Mortsel (BE); Van Broeck, Sigurd, 2980 Zoersel (BE); Van den Broeck, Marc, 2860 Sint-Katelijne-Waver (BE)
(74) Representative: ALU Antw Patent Attorneys

(57) **Abstract**

The present invention relates to a method for instant communicating between instant messaging clients of a plurality of instant messaging clients via an instant messaging server, each instant messaging client being coupled to the instant messaging server over a communications network. The method first comprises the step of logging all client related information for each instant messaging client of the plurality of instant messaging clients, determining keywords from the client-related information by analyzing the client related information, storing the keywords associated with the client related information for each client of the plurality of instant messaging clients in a storage part and finally determining for each instant messaging client of the plurality of instant messaging clients a relevant set of status information based on a set of status information of a first user of the first instant messaging client.

## Description

The present invention relates to a method for instant communicating between instant messaging clients of a plurality of instant messaging clients as described in the preamble of claim 1, a related system as described in the preamble of claim 3, a related server as described in the preamble of claim 5 and a related client as described in the preamble of claim 6.

Such a method for instant communicating between instant messaging clients is well known in the art. Currently, such instant messaging clients are capable of showing presence information like busy, available, away, etc. This presence information additionally allows users to write personal presence information as well. This personal presence information may reflect the user's current activities, hobbies, location, etc. The intention of presenting such personal presence information by an Instant Messaging client is to let other users of such intant messaging clienst know the user's current status and if possible, trigger some social communication within the context of the additional personal information added.

To such user, the presentation of presence information is "passive" communication. Such user doesn't know who is interested in the subject of personal information and who for instance dealt with the subject matter included in the personal information there before when he writes his personal presence information.

A disadvantage of such system is that it is not possible to establish an active instant communication between a first instant messaging client and a further instant messaging client that is associated in some way with the subject included in the presence information presented at a first instant messaging client associated with a first user.

An object of the present invention is to provide a method of the above known type but wherein mentioned disadvantage is mitigated by supporting the establishing of an instant communication between a first instant messaging client and a further instant messaging client that is associated in some way with the subject included in the presence information presented at a first instant messaging client associated with a first user.

According to the present invention, this objective is achieved by the method as described in claim 1, the system as described in claim 3 and the instant messaging server as described in claim 5.

Indeed, by first logging all client related information for each instant messaging client of the plurality of instant messaging clients, determining relevant keywords from this client related information by analyzing this client related information, storing these relevant keywords that are associated with this user related information for each instant messaging client of the plurality of instant messaging clients in a storage part and finally determining for each instant messaging client of the plurality of instant messaging clients a relevant set of status information based on a set of status information of a first client device that is associated with a first user.

The determining a relevant set of status information based on a set of status information of a first client device that is associated with a first user is performed by matching the keywords included in the set of status information with the relevant keywords derived in the analysis of client related information which is stored in the storage part.

The set of status information includes personal presence information added by a user of a first Instant Messaging client where the personal presence information may include user's current status.

Further this client-related information may include all messages, text, audio and video received by the instant messaging client which are recorded and analyzed using various technologies. The technologies that could be applied here is like speech recognition, keyword spotting, speech summarization, text analysis, emotion detection from speech and video, face recognition, motion detection, gesture recognition, etc. Keywords, key messages and summaries will come out of this analysis,

A further characteristic feature of the present invention is described in claim 2 and 4 and claim 6.

Additionally, the relevant set of status information for each instant messaging client of said plurality of instant messaging clients as determined can be presented at each corresponding instant messaging client, giving the first user that is associated with the first instant messaging client an indication of which users associated with corresponding instant client devices are able to be associated in a way with the keywords included in the status information of the first user. Hence the first user can see which users may be interesting to discuss the subject included in the status information of the first user with.

The invention enables to determine (and dynamically present) the relevant (presence) information of a user's buddies based on the first user's status (presence) information.

Further characterizing embodiments of the present method for instant communicating between instant messaging clients, a related system and related devices are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a functional representation of the communications system including a plurality of instant messaging clients IMC, IMC1, IMCx and an instant messaging server IMS wherein the implementation of the present invention is realized.
FIG. 2 represents the functional representation of the instant messaging server IMS of the communications system according to the present invention.

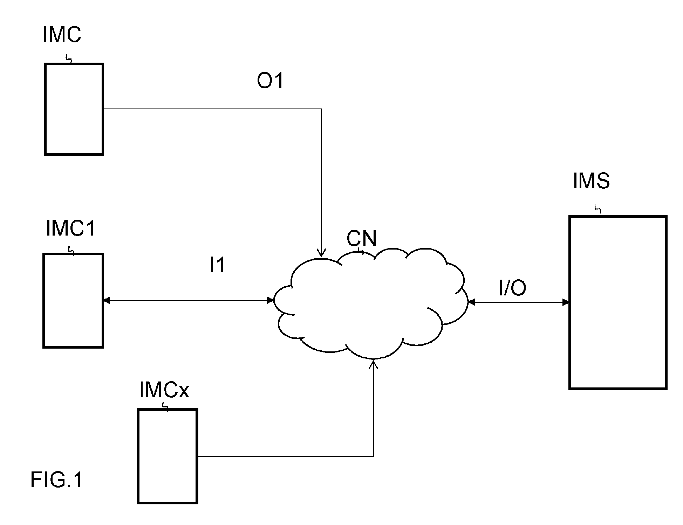

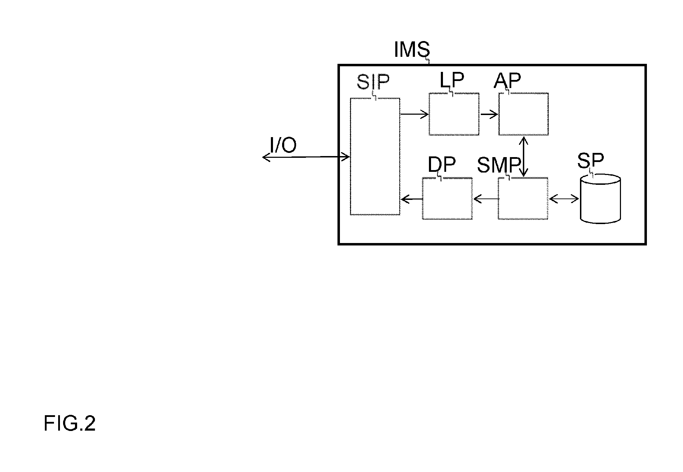

In the following paragraphs, referring to the drawings, an implementation of the method, system and the related devices according to the present invention will be described. In the first paragraph of this description the main elements of this network as presented in FIG. 1 and FIG.2 are described. In the second paragraph, all connections between the before mentioned network elements and described means are defined. In the succeeding paragraph the actual execution of the method for instant communicating between instant messaging clients.

First essential elements are instant messaging clients from a plurality of instant messaging clients IMC, IMC1, IMCx. Each instant messaging client being an instant messaging application able to be executed on a computing device having internet connectivity or alternatively connectivity to another network coupling further clients.

A further element is an instant messaging server IMS being a computer device running applications for supporting the communicating between instant messaging clients of a plurality of instant messaging clients IMC, IMC1 and IMCx.

Each instant messaging client being coupled to said instant messaging server IMS over a communications network CN where the communications network may include access networks, either fixed or wireless a combination thereof, a internet or core network or any other suitable communications link.,

The instant messaging server IMS comprises a logging part LP that is adapted to log all client related information for each instant messaging client of the plurality of instant messaging clients and an analysis part AP that is adapted to determine keywords from the client related information by analyzing the client related information. The instant messaging server IMS further comprises a storage management part SMP that is able to store the keywords associated with the client related information for each instant messaging client of the plurality of instant messaging clients in a storage part SP and a determination part DP that is adapted to determine, from the storage part SP, for each client of the plurality of instant messaging clients a relevant set of status information based on a set of status information of a first user.

The instant messaging server IMS further includes a server interfacing part SIP that is able the communicate with each instant messaging clients of the plurality of messaging clients, e.g. receive the client related information an send relevant sets of status information towards the respective clients over the communications network CN and is able to couple the instant communication server to the communications network.

The storage part SP further may be a database for storing all data on the instant messaging clients like the client related information and derived set of status information for each instant messaging clients of the plurality of messaging clients.

It is further to be noted that each instant messaging client IMC1 and IMCx have a same structure as instant messaging client IMC.

Further, although in the current embodiment only three instant messaging clients are described a system of the present invention usually includes a plurality of as instant messaging clients.

The server interfacing part SIP has an input/output-terminal that is at the same time an input/output-terminal of the instant messaging server IMS and further is coupled with an output to an input of the logging part LP. The logging part LP further is coupled to the analysis part AP that further is coupled to the storage management part SMP. The storage management part SMP first is coupled to the storage part and further is being coupled to the determination part DP that in turn further is coupled to the server interfacing part SIP.

In order to explain the present invention it is assumed that a first user and further users for instance, User A, User B and User C are friends and all are subscribed to the instant messaging application such as Google Talk, or Microsoft Office Communicator or others.

These users User A, User B and User C are the respective users of the instant messaging clients MC, MC1 and MCx.

User B once chats with other friends about Geneva. User B likes the beautiful small town. It is a pity that he never been there before. User C has been to Geneva several times. He visited many interesting and nice touristic and non-touristic scenes. He used to write the names of the places he has been to as the presence information (or status) in this instant messaging application.

One day, at some later moment in time, the first user, i.e. User A is planning a trip to Geneva. He changes his instant messaging application status to "plan a trip to Geneva".

At first, the instant messaging server IMS, by means of the logging part LP, logs all client related information for each instant messaging client of the plurality of instant messaging clients IMC, IMC1, IMCx.

Therefore, the logging part LP of the instant messaging server IMS logs and also logged in the past all client related information inside the instant messaging application that is related to the clients MC, MC1, MCx and hence related to the respective users A, B,C. This client related information may include chat text, status text, video, audio, etc. The logging part LP additionally also logged all conversations between the users, User a, user B and user C, including the past conversations related to Geneva.

In the above example hence the client related information related to client MC1 further includes the chat text of user B with respect to his opinion on Geneva discussed with the other users and that he likes the beautiful small town. It is a pity that he never been there before. The client related information additionally includes that the chat texts from User C that he has been in Geneva several times, that user C visited many interesting and nice touristic and non-touristic scenes and the names of the places he visited has been included in the client related information of client MCx.

Subsequently and also continuously the analysis part AP, determines keywords, from the logged client-related information by analyzing this client related information. The determined keywords subsequently are stored together with the associated client related information for each client of the plurality of instant messaging clients in a storage part SP. In this case keywords determined from all client related information amongst others include keywords that are related to Geneva, places in Geneva visited by user C and words expressing the wish to visit Geneva and much more as well..

At changing, by the instant messaging client IMC, of the instant messaging application status to "plan a trip to Geneva" the determination part determines for each instant messaging client IMC1, IMCx of the plurality of instant messaging clients IMC1, IMC1, IMCx a relevant set of status information based on the set of status information of a first user, being the user related to the first instant messaging client IMC. The determination part based on the words included in the status information of the user A including "plan a trip to Geneva" searches on related terms within the client related information of each instant messaging client IMC1, IMC1, IMCx as stored in the storage part SP.

Amongst others the determination part will find keywords related to client IMC1 (user B) stating the wish to visit Geneva once which will be included in the relevant set of status information of client IMC1 and find keywords related to instant messaging client IMCx (user C) stating all locations in Geneva he visited and other issues related to Geneva which will be included in the relevant set of status information of instant messaging client IMCx.

These determined relevant set of status information of respective instant messaging client MC1 and instant messaging client IMCx will be forwarded toward each of the respective instant messaging client IMC1 and IMCx and be presented as status information

Hence, after modification of status of user A, User A notices User B is very interested in this city too. (It might be a good idea to invite him to join this trip?) User A also sees User C has a lot of experience of this city. (It might be interesting to ask his advices?) In fact this invention aims to provide User A the relevant information (about Geneva) at right place (buddies' status) in right time (when he changes his status).

In order to realize aforementioned scenario, we need to log all information inside the GTalk, e.g. chat text, status text, video, audio, etc. All logged information needs to be analyzed and deposit into ontology databases. Later on, based on request, semantic search will be performed to look for desired messages/information.

The logging part will record all messages, text, audio and video past by the instant messaging client analyze them with various technologies and add/update the results into a database.. The technologies could be applied here is like speech recognition, keyword spotting, speech summarization, text analysis, emotion detection from speech and video, face recognition, motion detection, gesture recognition, etc. Keywords, key messages and summaries will come out of that analysis, which will be deposited into the database. Optionally semantic modeling approach can be applied here to associate relevant messages into semantic models. When a user modifies his status, the newly input text will be used as keywords to search the database. In case of semantic databases, semantic search will be applied. The search results will be displayed on the screen in proper way. For instance the status message from all of his buddies will be changed accordingly for a certain time period.

It is to be noted that based upon the relevant set of status information additionally automatically a connection between each of the instant communications clients could be established under control of the instant messaging server IMS.

It is to be noted that Google Talk is just an example of an Instant Messenger application although the invention can applied in any other instant messaging application such as other WEB2.0 applications like FaceBook, Linkedln, etc.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for instant communicating between instant messaging clients of a plurality of instant messaging clients (IMC1, IMC1, IMCx) via an instant messaging server (IMS), each instant messaging client being coupled to said instant messaging server (IMS) over a communications network (CN), **CHARACTERISED IN THAT** said method comprises the steps of:
a. logging all client related information for each instant messaging client of the plurality of instant messaging clients (IMC, IMC1, IMCx); and
b. determining keywords from said client-related information by analyzing said client related information for each instant messaging client; and
c. storing said keywords associated with said client related information for each client of said plurality of instant messaging clients in a storage part; and
d. determining for each instant messaging client of said plurality of instant messaging clients (IMC, IMC1, IMCx) a relevant set of status information based on a set of status information of a first user of said first instant messaging client.

2. Method according to claim 1, **CHARACTERISED IN THAT** said method further comprises the step of presenting said relevant set of status information for each instant messaging client of said plurality of instant messaging clients.

3. Instant messaging system, for instant communicating between instant messaging clients of a plurality of instant messaging clients, said system comprising a plurality of instant messaging clients (IMC, IMC1, IMCx) and an instant messaging server (IMS), each instant messaging client being coupled to said instant messaging server (IMS) over a communications network (CN), **CHARACTERISED IN THAT** said system comprises:
a. a logging part (LP) adapted to log all client related information for each instant messaging client of said plurality of instant messaging clients (IMC, IMC1, IMCx); and
b. analysis part (AP) adapted to determine keywords from said client related information by analyzing said user related information for each instant messaging client; and
c. a storage part (SP) adapted to store said keywords associated with said client related information for each instant messaging client of said plurality of instant messaging clients in a storage part; and
d. a determination part (DP) adapted to determine for each user of said plurality of instant messaging clients a relevant set of status information based on a set of status information of a first user.

4. System according to claim 3, **CHARACTERISED IN THAT** said system further comprises a status presenting part (PP), adapted to present said relevant set of status information for each instant messaging client of said plurality of instant messaging clients.

5. Instant messaging server (IMS), for instant communicating between instant messaging clients of a plurality of instant messaging clients (IMC, IMC1, IMCx) via said instant messaging server (IMS), each instant messaging client being coupled to said instant messaging server (IMS) over a communications network (CN), **CHARACTERISED IN THAT** said Instant messaging server (IMS) comprises:
a. a logging part (LP), adapted to log all client related information for each instant messaging client of said plurality of instant messaging clients (IMC, IMC1,IMCx); and
b. analysis part (AP), adapted to determine keywords from said client related information by analyzing said client related information for each instant messaging client; and
c. a storage management part (SMP), adapted to store said keywords associated with said client related information for each instant messaging client of said plurality of instant messaging clients in a storage part (SP); and
d. a determination part (DP) adapted to determine, from said storage part (SP), for each client of said plurality of instant messaging clients a relevant set of status information based on a set of status information of a first user.

6. Instant messaging client (IMC) for instant communicating between instant messaging clients of a plurality of instant messaging clients (IMC, IMC1, IMCx) via an instant messaging server (IMS), each instant messaging client being coupled to said instant messaging server (IMS) over a communications network (CN), **CHARACTERISED IN THAT** comprises a status presenting part (PP), adapted to present said relevant set of status information for said instant messaging client of said plurality of instant messaging clients (IMC, IMC1, IMCx).
